# EUROPEAN PATENT SPECIFICATION

(11) **EP 2 923 948 B1**
(45) Date of publication and mention of the grant of the patent: **06.05.2020**
(21) Application number: 15158115.4
(22) Date of filing: 06.03.2015
(51) Int. Cl.: B64D 37/30, F02C 9/40

(54) **AIRCRAFT SYSTEMS AND METHODS WITH GREEN FUEL TANKS**
FLUGZEUGSYSTEME UND VERFAHREN MIT TANKS FÜR GRÜNEN KRAFTSTOFF
SYSTÈMES ET PROCÉDÉS D'AÉRONEF AVEC DES RÉSERVOIRS DE CARBURANT VERT

(30) Priority: 24.03.2014 US 201414223428
(43) Date of publication of application: 30.09.2015
(73) Proprietor: Honeywell International Inc., Morris Plains, NJ 07950 (US)
(72) Inventor: BLUMER, Eric, Morristown, NJ 07962-2245 (US); ACHARYA, Mukund, Morristown, NJ 07962-2245 (US); MAK, Audie, Morristown, NJ 07962-2245 (US); SCAINI, Mario, Morristown, NJ 07962-2245 (US); HAGH, Bijan F., Morristown, NJ 07962-2245 (US)
(74) Representative: Houghton, Mark Phillip

(56) References cited:
- EP-A2- 2 677 138
- WO-A2-2009/040112
- US-A- 4 761 948
- US-A1- 2011 101 166
- US-A1- 2013 192 246
- US-B1- 7 818 969

## Description

### TECHNICAL FIELD

The present invention generally relates to aircraft systems and methods, and more particularly relates to aircraft systems and methods with green fuel tanks.

### BACKGROUND

Aircraft engines are used for a number of purposes, including propulsion and/or driving various other components such as, for example, generators, compressors, and pumps, to thereby supply electrical, pneumatic, and/or hydraulic power. Generally, the aircraft includes a primary or main engine for propulsion during flight, and the aircraft includes an auxiliary power unit (APU) to supply electrical, pneumatic, and/or hydraulic power to aircraft systems, particularly on the ground. Conventionally, both types of engines use the same type of fuel, such as Jet-A fuel.

It is generally advantageous to operate the engines in a more efficient manner, including from the perspectives of cost, fuel volume, emissions, and operational conditions. For example, conventional fuels may result in higher pollution emissions than alternative or green fuels. However, such green fuels may be a challenge to implement given the current state of operational and government requirements.

Accordingly, it is desirable to provide aircraft systems and methods with a more effective use of green fuel. Furthermore, other desirable features and characteristics of the present invention will become apparent from the subsequent detailed description of the invention and the appended claims, taken in conjunction with the accompanying drawings and this background of the invention.

Patent document number US2013/192246A1 addresses the general problem of how to use dual fuels in aircraft and describes a dual fuel engine control system comprising a first fuel control system configured to control the flow of a first fuel to an aircraft gas turbine engine, and a second fuel control system configured to control the flow of a second fuel to the aircraft gas turbine engine.

Patent document number EP2677138A2 describes a fuel system comprising a fluid blender in fluid communication with a source of a first fuel composition and a source of a second fuel composition via at least one inlet. The blender is operable to receive at least the first fuel composition and/or second fuel composition via the at least one inlet, and output a resultant fuel composition comprising the received fuel compositions via at least one outlet. The at least one outlet is in fluid communication with an engine fuel injection device.

### BRIEF SUMMARY

The present invention in its various aspects is as set out in the appended claims.

The invention concerns an aircraft fuel system. The system includes a main fuel tank configured to house primary fuel and a green fuel tank configured to house green fuel. The system further includes a mixing apparatus coupled to the main fuel tank and the green fuel tank. The mixing apparatus is configured to mix the primary fuel and the green fuel to result in a predetermined ratio of mixed fuel. The system further includes a controller configured to selectively command a first amount of primary fuel from the main fuel tank and a second amount of green fuel from the green fuel tank to result in the predetermined ratio of mixed fuel. The system further includes a main aircraft engine coupled to the controller, the main fuel tank, and the mixing apparatus. The main aircraft engine is configured to operate, in a first main engine mode, with the primary fuel from the main fuel tank and to operate, in a second main engine mode, with the mixed fuel from the mixing apparatus based on commands from the controller. The system further includes an auxiliary power source coupled to the controller and the green fuel tank. The auxiliary power source is configured to operate with at least a portion of the green fuel from the green fuel tank based on commands from the controller.

### BRIEF DESCRIPTION OF THE DRAWINGS

The present invention will hereinafter be described in conjunction with the following drawing figures, wherein like numerals denote like elements, and
FIG. 1 is a schematic block diagram of an aircraft system according to an exemplary embodiment;
FIG. 2 is a schematic block diagram of an aircraft system according to another exemplary embodiment;
FIG. 3 is a schematic diagram of a fuel tank arrangement according to an exemplary embodiment; and
FIG. 4 is a schematic representation of a user interface of an aircraft system according to an exemplary embodiment.

### DETAILED DESCRIPTION

The following detailed description is merely exemplary in nature and is not intended to limit the invention or the application and uses of the invention.

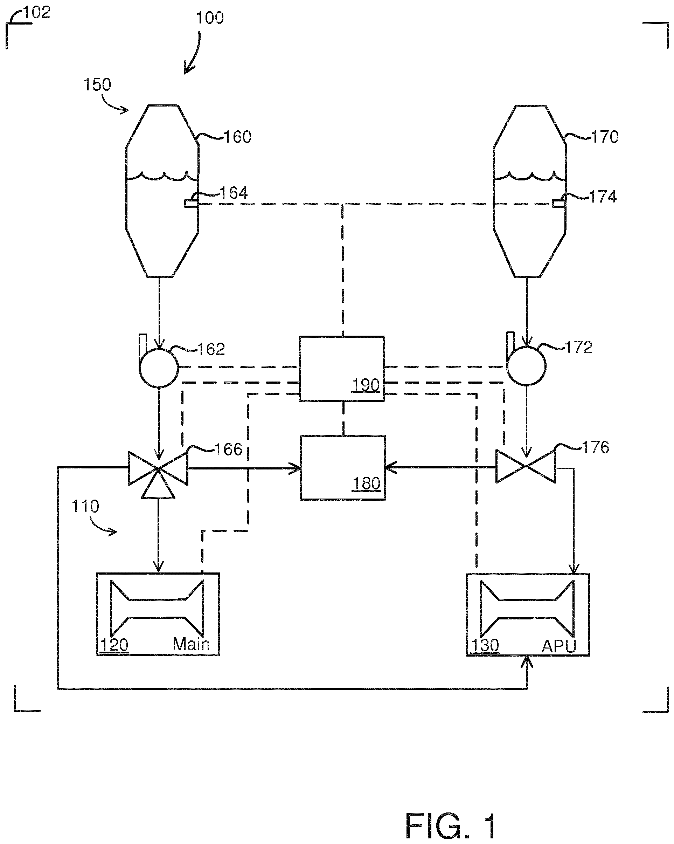

FIG. 1 is a schematic diagram of an aircraft system 100 in accordance with an exemplary embodiment. Generally, the aircraft system 100 includes one or more power sources 110 and one or more fuel sources 150 housed on an aircraft 102. The aircraft system 100 further includes one or more controllers 190 for operating the power sources 110 and the fuel sources 150 based on predetermined instructions stored in memory and executed by a processor and/or from commands from a pilot or operators via a user interface 192 or other aircraft systems. The controller 190 may be, for example, a FADEC. As described in greater detail below, the power sources 110 operate with fuel supplied by the fuel sources 150 based on commands from the controller 190.

As shown, the power sources 110 include a main engine 120 and an auxiliary power source 130. The main engine 120 may be any suitable type of engine that provides main propulsion for the aircraft 102, including turboprop engines, turboshaft engines, turbojet, and turbofan engines. As is generally known, the main engine 120 is configured to receive fuel, mix the fuel with air, ignite the mixture, and extract the energy from the resulting combustion gases. An auxiliary power source may be any suitable type of engine that provides auxiliary power for the aircraft 102, including electrical, pneumatic, and/or hydraulic power to various aircraft systems, particularly on the ground. An auxiliary power source may be, for example, a turboshaft engine that receives fuel, mixes the fuel with air, ignites the mixture, and extracts the energy from the resulting combustion gases. The auxiliary power source 130 according to the present invention is a fuel cell. Additional details about the fuel utilized by the main engine 120 and the auxiliary power source 130 are provided below.

The fuel sources 150 include a main fuel tank 160, a green fuel tank 170, and a mixing apparatus 180. The fuel sources 150 may also be considered to include a main fuel pump 162, a main fuel sensor 164, a main fuel valve 166, a green fuel pump 172, a green fuel sensor 174, and a green fuel valve 176. Although not shown, additional pumps, valves, sensors, and the like may be provided for operating the fuel sources 150 according to the functions described below. The components of the fuel sources 150 will be introduced below prior to a more detailed description of operation of the fuel sources 150 within the aircraft system 100.

As the name suggests, the main fuel tank 160 houses primary or main fuel. Generally, the main fuel tank 160 may be any suitable structure for containing the primary fuel. The main fuel tank 160 may be composed of metal or any other suitable material to inhibit or prevent leaks. In practice, the main fuel tank 160 may be a number of fuel tanks dedicated to primary fuel. The term "primary fuel" may be used to reference traditional types of aircraft engine fuel, including kerosene based Jet A and Jet A-1 fuels and other types of fuels for commercial aviation and jet propellant JP-8 and JP-5 fuels for military jet engines. The main fuel pump 162 functions to remove primary fuel from the main fuel tank 160 based on commands from the controller 190. The main fuel sensor 164 functions to measure or derive the amount of fuel in the main fuel tank 160 and provide the amount to the controller 190 and/or the pilot via the user interface 192. The main fuel valve 166 is configured to direct the fuel from the main fuel tank 160 to the main fuel tank 160, the APU 170, or the mixing apparatus 180 based on commands from the controller 190, as discussed in greater detail below.

The green fuel tank 170 houses green fuel. Generally, the green fuel tank 170 may be any suitable structure for containing the green fuel. The green fuel tank 170 may be composed of metal or any other suitable material to inhibit or prevent leaks. In practice, the green fuel tank 170 may be any number of fuel tanks dedicated to green fuel. As used herein, the term "green fuel" may be used to reference various types of biofuels, including green diesel and ultra-low sulfur fuels. In one exemplary embodiment, the term "green fuel" may be defined according to government regulation or industry standard. As an example, ASTM D7566-11 is a specification for aviation turbine fuel containing synthesized hydrocarbons. Such synthesized hydrocarbons may include, as examples, bio-derived synthetic components, including hydroprocessed esters and fatty acids (HEFA) from vegetable oil-containing feedstock, as well as fuel produced from coal, natural gas, or biomass using Fischer-Tropsch (FT) synthesis. In one exemplary embodiment, the term "ultra-low sulfur fuel," including ultra-low sulfur diesel (ULSD) may be defined by government or industry standard.

The green fuel pump 172 functions to remove the green fuel from the green fuel tank 170 based on commands from the controller 190. The green fuel sensor 174 functions to measure or derive the amount of fuel in the green fuel tank 170 and provide the amount to the controller 190 and/or the pilot via the user interface 192. The green fuel valve 176 is configured to direct the fuel from the green fuel tank 170 to the auxiliary power source 130 or the mixing apparatus 180 based on commands from the controller 190, as discussed in greater detail below.

The mixing apparatus 180 receives primary fuel from the main fuel tank 160 and green fuel from the green fuel tank 170. The mixing apparatus 180 mixes a first amount of the primary fuel and a second amount of the green fuel on-board the aircraft to provide a mixed fuel at a predetermined primary to green ratio. The mixing apparatus 180 may be any suitable apparatus for mixing and delivering the fuels in a predetermined ratio. In one exemplary embodiment, the mixing apparatus 180 may include metering apparatus and a tank.

During operation, the controller 190 operates the main engine 120 and the auxiliary power source 130 in one or more modes. Typically, the controller 190 selects a mode for the main engine 120 and a mode for the auxiliary power source 130 based on considerations discussed below.

In a first main engine mode, the controller 190 commands the fuel sources 150 to provide the main engine 120 with primary fuel from the main fuel tank 160 (e.g., via commands to the pump 162 and valve 166). In a second main engine mode, the controller 109 commands the fuel sources 150 to provide the main engine 120 with mixed fuel from the mixing apparatus 180.

In a first auxiliary power source mode, the controller 190 commands the fuel sources 150 to provide the auxiliary power source 130 with green fuel from the green fuel tank 170 (e.g., via commands to the pump 172 and valve 176). In a second auxiliary power source mode, the controller 190 commands the fuel sources 150 to provide the auxiliary power source 130 with primary fuel from the main fuel tank 160 (e.g., via commands to pump 162 and valves 166).

The controller 190 selects the appropriate mode based on a number of considerations. In one exemplary embodiment, the pilot or operator provides commands for the controller 190 via the user interface 192. As further examples, the controller 190 selects the appropriate mode based on flight status or mode and the fuel levels within the main fuel tank 160 and the green fuel tank 170.

Typically, the controller 190 commands the main engine 120 to operate in the first main engine mode such that the main engine 120 receives and consumes only primary fuel. However, in some situations, the controller 190 commands the main engine 120 to operate in the second main engine mode such that the main engine 120 receives and consumes a mixture of primary fuel and green fuel. In effect, the green fuel supplements the primary fuel to supply the main engine 120. This may be particularly desirable or advantageous during unpredicted flight situations, such as an in-flight diversion, or during situations in which the amount of primary fuel consumed was greater than expected. The controller 190 may anticipate these situations by monitoring the amount of primary fuel remaining in the main fuel tank 160 and the updated expected usage.

Government regulation, technical or operational specifications, or other such requirements may dictate the amount of green fuel that may be used to operate the main engine 120. Such requirements may be expressed as a predetermined or minimum ratio of primary fuel to green fuel. As an example, the predetermined or minimum ratio of primary fuel to green fuel may be 50:50. In other words, at least half of the fuel provided to the main engine 120 must be primary fuel. This is also the minimum predetermined ratio considered in the present invention.

As such, during flight, the controller 190 monitors the amount of primary fuel remaining and the anticipated usage of primary fuel to arrive at the desired destination. If the controller 190 determines that primary fuel in the main fuel tank 160 is sufficient to arrive at the destination, the controller 190 continues to operate in the first main engine mode. However, if during flight, the controller 190 determines that the primary fuel in the main fuel tank 160 is insufficient to arrive at the destination, the controller 190 switches operation to the second main engine mode. The controller 190 may immediately transition into the second main engine mode, or the controller 190 may select an appropriate time or location to switch to the second main engine mode such that the amount of fuel in the main fuel tank 160 is sufficient to reach the desired location at the predetermined ratio of primary fuel to green fuel. For example, the controller 190 may select the time or location to switch to the second main engine mode at which the remaining primary fuel is sufficient, considering the 50:50 ratio, to arrive at the desired locations. The controller 190 may also consider a margin of error when determining the appropriate main engine mode. As such, during the transition to the second main engine mode, the controller 190 selects and commands a first amount of primary fuel and a second amount of green fuel to the mixing apparatus 180 to result in the predetermined ratio delivered to the main engine 120. In further embodiment, the controller 190 may select the appropriate mode based on location and/or applicable environmental standards. For example, some countries may require lower emissions, and thus additional use of green fuels, as opposed to other countries.

In some embodiments, additional modes may be provided, such as modes that burn a different ratio of primary fuel and green fuel than the predetermined minimum ratio discussed above. Such different ratios may be selected based on different or additional considerations than the second main engine mode discussed above. Other considerations may include fuel efficiencies and pollution issues. For example, the controller 190 may select operation in the second main engine mode to at least partially burn green fuel, which may result in less pollution than burning only primary fuel, or the controller 190 may select operation in a further auxiliary power source mode in which the auxiliary power source operates with a mixture of primary and green fuels.

Typically, the controller 190 commands the auxiliary power source 130 to operate in the first auxiliary power source mode such that the auxiliary power source 130 receives and consumes green fuel. However, in some situations, the controller 190 commands the auxiliary power source 130 to operate in the second auxiliary power source mode such that the auxiliary power source 130 receives and consumes primary fuel. The controller 190 may command the auxiliary power source 130 to operate in the second mode, for example, when the green fuel from the green fuel tank 170 is low. As such, either mode for operating the auxiliary power source 130 may be selected, depending on the scenario, including the level of fuel sources, location, and emission requirements.

Accordingly, the controller 190 selects the appropriate main engine mode and auxiliary power source mode to deliver and utilize the appropriate amount, combination, and type of fuel to operate in an improved manner. As discussed below, other exemplary embodiments may use green fuel in other arrangements.

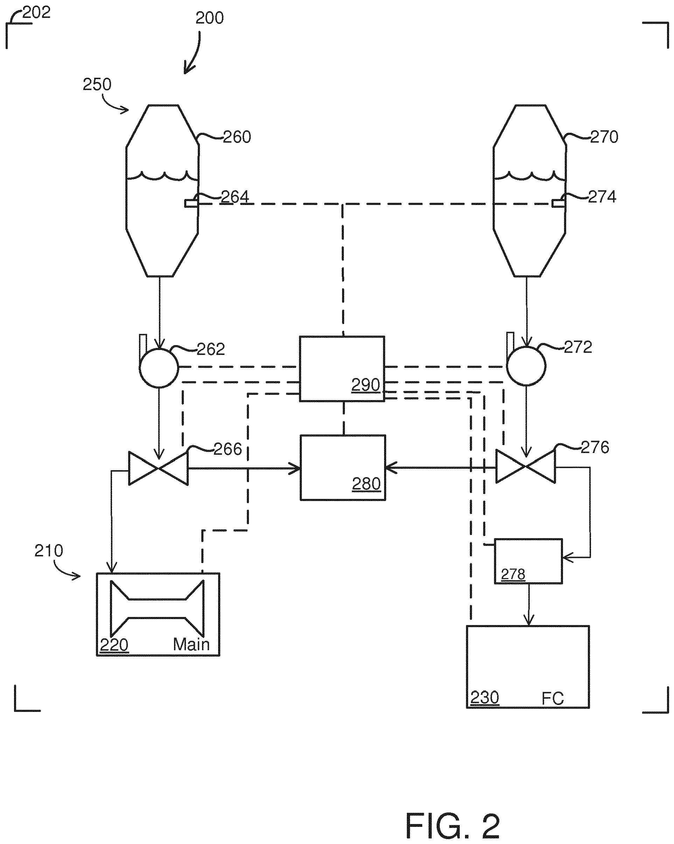

FIG. 2 is a schematic block diagram of an aircraft system 200 according to another exemplary embodiment. Unless otherwise noted, the aircraft system 200 operates similar to the aircraft system 100 discussed above in reference to FIG. 1.

As above, the aircraft system 200 includes one or more power sources 210 and one or more fuel sources 250 housed on an aircraft 202, as well as one or more controllers 290 for operating the power sources 210 and the fuel sources 250 based on predetermined instructions and/or from commands from a pilot or operators via a user interface 292.

In addition to the main engine 220, as above, in this exemplary embodiment, the power sources 210 include a fuel cell 230. Generally, a fuel cell 230 is an energy device that converts chemical energy from a fuel into electricity through a chemical reaction with oxygen or another oxidizing agent. In one exemplary embodiment, such as the embodiment discussed below, hydrogen is the fuel, but other hydrocarbons such as natural gas and alcohols like methanol may also be used. As typically arranged, electrons are drawn from the hydrogen fuel at an anode to a cathode through an external circuit, thereby producing electricity. Any suitable type of fuel cell 230 may be provided, including a proton exchange membrane fuel cell. During operation, the fuel cell 230 may provide electricity to a number of aircraft systems and/or other functions, such as tank inerting or water generation. Although not shown, the system 200 may further include an an auxiliary engine, as discussed above.

As above, the fuel sources 250 include a main fuel tank 260, a green fuel tank 270, and a mixing apparatus 280. The fuel sources 250 may also be considered to include a main fuel pump 262, a main fuel sensor 264, a main fuel valve 266, a green fuel pump 272, a green fuel sensor 274, and a green fuel valve 276 that operate as discussed above. Although not shown, additional pumps, valves, sensors, and the like may be provided for operating the fuel sources 250 according to the functions described below. According to the invention, a green fuel processor 278 is provided. As discussed in greater detail below, the green fuel processor 278 receives green fuel and functions to generate hydrogen from the green fuel. The fuel processor 278 may generate hydrogen, for example, from any suitable fuel reforming technique, including steam reforming and autothermal reforming.

During operation, the controller 290 operates the main engine 220 in one or more modes. In one exemplary embodiment, the controller 290 operates the fuel cell 230 in a single mode. As such, during operation, the controller 290 commands the green fuel tank 270 (e.g., via the green fuel pump 272 and the green fuel valve 276) to deliver green fuel to the green fuel processor 278. The green fuel processor 278 provides hydrogen fuel to the fuel cell 230 for the generation of electricity. Typically, the controller 290 selects a mode for the main engine 220 based on considerations discussed below.

In a first main engine mode, the controller 290 commands the fuel sources 250 to provide the main engine 220 with primary fuel from the main fuel tank 260 (e.g., via commands to the pump 262 and valve 266). In a second main engine mode, the controller 290 commands the fuel sources 250 to provide the main engine 220 with mixed fuel from the mixing apparatus 280.

Typically, as above, the controller 290 commands the main engine 220 to operate in the first main engine mode such that the main engine 220 receives and consumes only primary fuel. However, in some situations, the controller 290 commands the main engine 220 to operate in the second main engine mode such that the main engine 220 receives and consumes a mixture of primary fuel and green fuel, as discussed above. Accordingly, the controller 290 selects the appropriate main engine mode to deliver and utilize the appropriate amount, combination, and type of fuel to operate in an improved manner.

The main fuel tank (e.g., main fuel tank 160, 260) and the green fuel tank (e.g., green fuel tank 170, 270) may be configured and structured in any suitable manner. In one exemplary embodiment, the main fuel tank and the green fuel tank are configured as dedicated and separate tanks, as depicted in FIGS. 1 and 2. In other words, the main fuel tanks 160, 260 discussed above contain only (e.g., 100%) primary fuel, and the green fuel tanks 170, 270 discussed above contain only (e.g., 100%) green fuel. In this type of arrangement, each fuel tank may be more easily serviced and/or additional total fuel may be provided as compared to conventional fuel systems that only have primary fuel. Additional exemplary arrangements are discussed below.

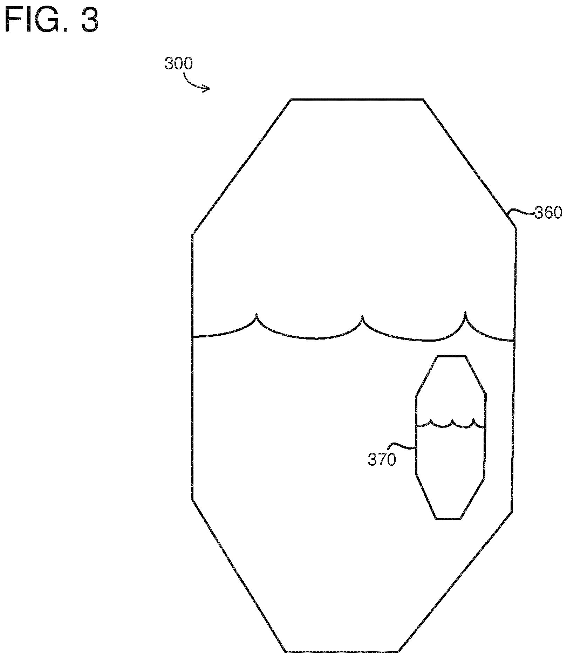

FIG. 3 is a schematic view of a fuel tank assembly 300 according to another exemplary embodiment. The fuel tank assembly 300 includes a main fuel tank 360 and a green fuel tank 370 that function as discussed above.

As shown, in this exemplary embodiment, the green fuel tank 370 is arranged within the main fuel tank 360. Although the main fuel tank 360 contains the green fuel tank 370, tanks 360, 370 are arranged such that the fuels remain separate. However, in this exemplary embodiment, any leaks in the green fuel tank 370 may be contained by the main fuel tank 360 without hazard. Additionally, this arrangement results in a same total volume of fuel and fuel tanks as a conventional arrangement with only main fuel tanks.

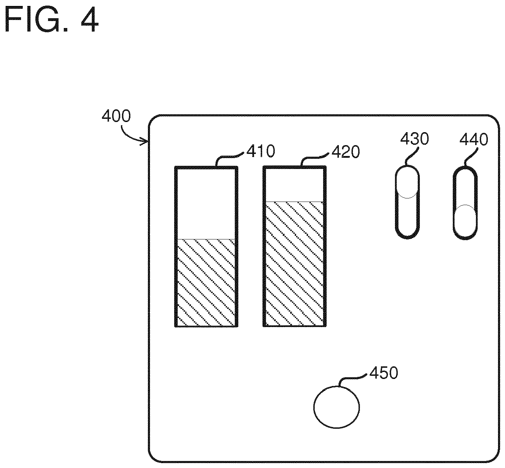

FIG. 4 is a schematic representation of a user interface 400 of an aircraft system according to an exemplary embodiment. As an example, the user interface 400 may be coupled to the controller (e.g., controllers 190. 290) of the systems 100, 200 discussed above. Generally, any suitable control functionality may be provided for the systems 100, 200 with the associated appropriate interaction enabled by the user interface 400. In some exemplary embodiments, the systems 100, 200 may be automatic such that no user input is necessary. In such embodiments, the user interface 400 may be omitted.

In general, the user interface 400 may include a display device, such as a suitably configured liquid crystal display (LCD), plasma, cathode ray tube (CRT), or head-up display, graphical elements. The user interface 400 enables the user to enter data and/or control the various aspects of the systems 100, 200 (FIGS. 1 and 2). For example, the user interface 400 may be formed by interactive graphical elements rendered on a touch screen of the display device. Other user input devices may include a keyboard or keypad, a voice recognition system, a cursor control device, a joystick or knob, or the like.

In the depicted embodiment, the user interface 400 may include visual depictions of a level of fuel 410 in the main fuel tank (e.g., fuel tank 160, 260) and a level of fuel 420 in the green fuel tank (e.g., fuel tank 170, 270). This provides the operator with a current fuel state of the aircraft, and as an example, enables the initiation, continuation, or discontinuation of the system modes discussed above. In particular, the user interface 400 further includes one or more switches 430, 440 that enable selection of one or more of the modes discussed above. As shown, switch 430 enables selection between a first main engine mode in which the main engine receives only primary fuel and a second main engine mode in which the main engine receives a mixture of primary and green fuels. In this embodiment, switch 440 is provided to enable selection between a first auxiliary power source mode in which the auxiliary power source receives only green fuel and a second auxiliary power source mode in which the auxiliary power source receives only primary fuel. In some embodiments, the user interface 400 includes one or more warning lights 450. As examples, the warning light 450 may inform the operator that one or more of the fuel tanks is getting low and/or that the mode should be switched. Other selections and/or information corresponding to the functions discussed above may be provided.

Accordingly, exemplary embodiments discussed above may include a separate green (or bio-) fuel tank with green fuel for the fuel cell, while also making the green fuel available for the main engines to use. As an example, green fuel may include less sulfur than primary fuel. This allows the fuel cell to have the advantages of reduced emissions and no sulfur and alleviates the issue that the unused green fuel from a flight as dead weight that was otherwise carried around just for the fuel cell. In the case where the main engines need additional fuel, the green tank may be drained into the normal main engine fuel tanks. As an example, current certification requirements would require that the concentration of the main fuel tanks be maintained below 50% green fuel, which may be managed by a controller or other type of metering device. Operationally, aircraft are typically required to maintain certain reserves of fuel for emergencies like diversion to new airports. Generally, the green fuel in the green fuel tank would not need to be mixed into the main tanks to be included in the reserve calculation. As such, draining of the green fuel tank would only need to be done in extreme situations when the fuel reserves were down to very low levels, e.g., approaching the 50% green fuel concentration after mixing. This would allow many flights worth of green fuel to be carried with no penalty for the green fuel tank or green fuel weight. This would reduce the need for green fuel at all airports and the extra servicing of the green fuel tank for each flight.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. An aircraft system (100, 200), comprising:
a main fuel tank (160, 260) configured to house primary fuel;
a green fuel tank (170, 270) configured to house green fuel;
a mixing apparatus (180, 280) coupled to the main fuel tank (160, 260) and the green fuel tank (170, 270), the mixing apparatus (180, 280) configured to mix the primary fuel and the green fuel to result in a predetermined ratio of mixed fuel; and
a controller (190, 290) configured to selectively command a first amount of primary fuel from the main fuel tank (160, 260) and a second amount of green fuel from the green fuel tank (170, 270) to result in the predetermined ratio of mixed fuel;
a main aircraft engine (120, 220) coupled to the controller (190, 290), the main fuel tank (160, 260), and the mixing apparatus (180, 280), wherein the main aircraft engine (120, 220) is configured to operate, in a first main engine mode, with the primary fuel from the main fuel tank (160, 260) and to operate, in a second main engine mode, with the mixed fuel from the mixing apparatus (180, 280) based on commands from the controller (190, 290), wherein the controller (190, 290) is configured to selectively operate the main aircraft engine (120, 220) in the first main engine mode and in the second engine mode;
an auxiliary power source (130, 230) coupled to the controller (190, 290) and the green fuel tank (170, 270), wherein the auxiliary power source (130, 230) is configured to operate with at least a portion of the green fuel from the green fuel tank (170, 270) based on commands from the controller (190, 290);
a green fuel processor (278) coupled to the green fuel tank (270) and the auxiliary power source (230), wherein the green fuel processor (278) is configured to receive the green fuel from the green fuel tank (270) and to process the green fuel into hydrogen, and wherein the auxiliary power source is a fuel cell (230) configured to operate with the hydrogen of the green fuel; and
a main fuel sensor (164, 264) coupled to the controller (190, 290) and configured to measure a first level of fuel in the main fuel tank (160, 260), the controller (190, 290) configured to selectively command the first amount and the second amount based on the first level of fuel in the main fuel tank (160, 260) and such that the first amount and the second amount result in the predetermined ratio of at least 50:50 of primary fuel to green fuel, and
wherein the controller is configured to consider the first level in view of an anticipated usage of the primary fuel to reach a predetermined destination, and wherein the controller is configured to select an appropriate time for a transition between the first main engine mode and the second main engine mode such that the first level is sufficient to maintain the predetermined ratio of at least 50:50 throughout the anticipated usage to the predetermined destination.

2. The aircraft system (100, 200) of claim 1, wherein the main fuel tank (160, 260) and the green fuel tank (170, 270) are separate fuel tanks.

3. The aircraft system (100, 200) of claim 1, wherein the green fuel tank (170, 270) is housed within the main fuel tank (160, 260) and configured to house the green fuel while maintaining separation between the green fuel and the primary fuel.

4. The aircraft system (100, 200) of claim 1, wherein the primary fuel is a kerosene-based fuel and the green fuel is a biofuel.

## Patentansprüche

1. Flugzeugsystem (100, 200), umfassend:
einen Hauptkraftstofftank (160, 260), der konfiguriert ist, um Primärkraftstoff aufzunehmen;
einen Tank für grünen Kraftstoff (170, 270), der konfiguriert ist, um grünen Kraftstoff aufzunehmen;
eine Mischvorrichtung (180, 280), die mit dem Hauptkraftstofftank (160, 260) und dem Tank für grünen Kraftstoff (170, 270) gekoppelt ist, wobei die Mischvorrichtung (180, 280) konfiguriert ist, um den Primärkraftstoff und den grünen Kraftstoff zu mischen, um ein vorbestimmtes Mischkraftstoffverhältnis zu ergeben; und
eine Steuerung (190, 290), die konfiguriert ist, um selektiv eine erste Menge an Primärkraftstoff aus dem Hauptkraftstofftank (160, 260) und eine zweite Menge an grünem Kraftstoff aus dem Tank für grünen Kraftstoff (170, 270) anzufordern, um das vorbestimmte Mischkraftstoffverhältnis zu ergeben;
ein Hauptflugzeugtriebwerk (120, 220), das mit der Steuerung (190, 290), dem Hauptkraftstofftank (160, 260) und der Mischvorrichtung (180, 280) gekoppelt ist, wobei das Hauptflugzeugtriebwerk (120, 220) konfiguriert ist, um in einem ersten Haupttriebwerkmodus mit dem Primärkraftstoff aus dem Hauptkraftstofftank (160, 260) zu arbeiten und in einem zweiten Haupttriebwerkmodus mit dem Mischkraftstoff aus der Mischvorrichtung (180, 280) basierend auf Befehlen von der Steuerung (190, 290) zu arbeiten, wobei die Steuerung (190, 290) konfiguriert ist, um das Hauptflugzeugtriebwerk (120, 220) in dem ersten Haupttriebwerkmodus und in dem zweiten Triebwerkmodus selektiv zu betreiben;
eine Hilfsenergiequelle (130, 230), die mit der Steuerung (190, 290) und dem Tank für grünen Kraftstoff (170, 270) gekoppelt ist, wobei die Hilfsenergiequelle (130, 230) konfiguriert ist, um mit mindestens einem Teil des grünen Kraftstoffs aus dem Tank für grünen Kraftstoff (170, 270) basierend auf Befehlen von der Steuerung (190, 290) zu arbeiten;
einen Prozessor für grünen Kraftstoff (278), der mit dem Tank für grünen Kraftstoff (270) und der Hilfsenergiequelle (230) gekoppelt ist, wobei der Prozessor für grünen Kraftstoff (278) konfiguriert ist, um den grünen Kraftstoff aus dem Tank für grünen Kraftstoff (270) zu empfangen und um den grünen Kraftstoff zu Wasserstoff zu verarbeiten, und wobei die Hilfsenergiequelle eine Kraftstoffzelle (230) ist, die konfiguriert ist, um mit dem Wasserstoff des grünen Kraftstoffs zu arbeiten; und
einen Hauptkraftstoffsensor (164, 264), der mit der Steuerung (190, 290) gekoppelt und konfiguriert ist, um einen ersten Kraftstoffstand in dem Hauptkraftstofftank (160, 260) zu messen, wobei die Steuerung (190, 290) konfiguriert ist, um selektiv die erste Menge und die zweite Menge basierend auf dem ersten Kraftstoffstand in dem Hauptkraftstofftank (160, 260) anzufordern, und derart, dass die erste Menge und die zweite Menge das vorbestimmte Verhältnis von Primärkraftstoff zu grünem Kraftstoff von mindestens 50:50 ergibt, und
wobei die Steuerung konfiguriert ist, um den ersten Stand im Hinblick auf eine erwartete Verwendung des Primärkraftstoffs zum Erreichen eines vorbestimmten Ziels zu berücksichtigen, und wobei die Steuerung konfiguriert ist, um eine geeignete Zeit für einen Übergang zwischen dem ersten Haupttriebwerkmodus und dem zweiten Haupttriebwerkmodus auszuwählen, sodass der erste Stand ausreichend ist, um das vorbestimmte Verhältnis von mindestens 50:50 während der erwarteten Verwendung bis zu dem vorbestimmten Ziel aufrechtzuerhalten.

2. Flugzeugsystem (100, 200) nach Anspruch 1, wobei der Hauptkraftstofftank (160, 260) und der Tank für grünen Kraftstoff (170, 270) separate Kraftstofftanks sind.

3. Flugzeugsystem (100, 200) nach Anspruch 1, wobei der Tank für grünen Kraftstoff (170, 270) innerhalb des Hauptkraftstofftanks (160, 260) aufgenommen und konfiguriert ist, um den grünen Kraftstoff unter Beibehaltung der Trennung zwischen dem grünen Kraftstoff und dem Primärkraftstoff aufzunehmen.

4. Flugzeugsystem (100, 200) nach Anspruch 1, wobei der Primärkraftstoff ein Kraftstoff auf Kerosinbasis ist und der grüne Kraftstoff ein Biokraftstoff ist.

## Revendications

1. Système d'aéronef (100, 200), comprenant :
un réservoir principal de carburant (160, 260), conçu pour loger du carburant primaire ;
un réservoir de carburant vert (170, 270), conçu pour loger du carburant vert ;
un appareil de mélange (180, 280), accouplé au réservoir principal de carburant (160, 260) et au réservoir de carburant vert (170, 270), l'appareil de mélange (180, 280) étant conçu pour mélanger le carburant primaire et le carburant vert pour donner un rapport prédéfini de carburant mixte ; et
un dispositif de commande (190, 290) conçu pour commander sélectivement une première quantité de carburant primaire du réservoir principal de carburant (160, 260) et une seconde quantité de carburant vert du réservoir de carburant vert (170, 270) pour aboutir au rapport prédéfini de carburant mixte ;
un moteur principal d'aéronef (120, 220) accouplé au dispositif de commande (190, 290), au réservoir principal de carburant (160, 260) et à l'appareil de mélange (180, 280), le moteur principal d'aéronef (120, 220) étant conçu pour fonctionner, dans un premier mode de moteur principal, avec le carburant primaire provenant du réservoir principal de carburant (160, 260) et pour fonctionner, dans un second mode de moteur principal, avec le carburant mixte provenant de l'appareil de mélange (180, 280) en fonction d'instructions du dispositif de commande (190, 290), le dispositif de commande (190, 290) étant conçu pour actionner sélectivement le moteur principal de l'aéronef (120, 220) dans le premier mode de moteur principal et dans le second mode de moteur ;
une source d'alimentation auxiliaire (130, 230), accouplée au dispositif de commande (190, 290) et au réservoir de carburant vert (170, 270), la source d'alimentation auxiliaire (130, 230) étant conçue pour fonctionner avec au moins une partie du carburant vert provenant du réservoir de carburant vert (170, 270) en fonction des instructions du dispositif de commande (190, 290) ;
un processeur de carburant vert (278) accouplé au réservoir de carburant vert (270) et à la source d'alimentation auxiliaire (230), le processeur de carburant vert (278) étant conçu pour recevoir le carburant vert du réservoir de carburant vert (270) et pour transformer le carburant vert en hydrogène et la source d'alimentation auxiliaire étant une pile à combustible (230) conçue pour fonctionner avec l'hydrogène du carburant vert ; et
un capteur de carburant principal (164, 264) accouplé au dispositif de commande (190, 290) et conçu pour mesurer un premier niveau de carburant dans le réservoir principal de carburant (160, 260), le dispositif de commande (190, 290) étant conçu pour commander sélectivement la première quantité et la seconde quantité en fonction du premier niveau de carburant dans le réservoir principal de carburant (160, 260) et de sorte que la première quantité et la seconde quantité donnent le rapport prédéfini d'au moins 50:50 de carburant primaire au carburant vert et
dans lequel le dispositif de commande est conçu pour considérer le premier niveau en vue d'une utilisation prévue du carburant primaire pour atteindre une destination prédéfinie et dans lequel le dispositif de commande est conçu pour sélectionner un temps approprié pour une transition entre le premier mode de moteur principal et le second mode de moteur principal, de sorte que le premier niveau soit suffisant pour maintenir le rapport prédéfini d'au moins 50:50 tout au long de l'utilisation prévue jusqu'à la destination prédéfinie.

2. Système d'aéronef (100, 200) selon la revendication 1, dans lequel le réservoir principal de carburant (160, 260) et le réservoir de carburant vert (170, 270) sont des réservoirs séparés de carburant.

3. Système d'aéronef (100, 200) selon la revendication 1, dans lequel le réservoir de carburant vert (170, 270) est logé dans le réservoir principal de carburant (160, 260) et conçu pour loger le carburant vert, tout en maintenant la séparation entre le carburant vert et le carburant primaire.

4. Système d'aéronef (100, 200) selon la revendication 1, dans lequel le carburant primaire est un carburant à base de kérosène et le carburant vert est un biocarburant.
